# EUROPEAN PATENT APPLICATION

(11) **EP 1 684 190 A2**
(43) Date of publication of application: **26.07.2006**
(21) Application number: 05113058.1
(22) Date of filing: 29.12.2005
(51) Int. Cl.: G06F 17/20

(54) **System and method for storing a document in a serial binary format**

(30) Priority: 21.01.2005 US 41400
(71) Applicant: Microsoft Corporation, Redmond WA 98052 (US)
(72) Inventor: Wang, Haiyong, Redmond, Washington 98052 (US); Wakeam, Jamie N., Redmond, Washington 98052 (US); Turner, Jerome Joseph, Redmond, Washington 98052 (US); Poulose, Sebastian, Redmond, Washington 98052 (US); Bhattacharyay, Subha, Redmond, Washington 98052 (US)
(74) Representative: Grünecker, Kinkeldey, Stockmair & Schwanhäusser Anwaltssozietät

(57) **Abstract**

A computer-readable medium having a data structure for storing document data in a serialized binary format so that the document data is accessible to other applications. A document structure is generated that includes root node data. The document is stored in a serial binary data format. The serial binary format includes storing size data associated with the document structure in a first data field. The serial binary format also includes storing document structure descriptor data in a second data field, wherein the document structure descriptor data includes at least one flag for indicating data expectancy. The serial binary format further includes storing root node data in a third data filed, wherein the root node data is indicated by at least one of the flags.

## Description

### Background of the Invention

Tablet PCs typically allow a user to draw or write directly on the screen. This drawing or writing is generally referred to as "inking." Inking is a type of user input and may include a touch screen and a user engaging a computing pen and writing on a screen as if writing with a traditional pen and paper. Inking is used with a wide variety of applications. For example, inking may be used in drawing applications, painting applications, word processing applications, credit card signature applications, and the like.

Inking may include more than just a visual representation of pen strokes; it may include a data type. While data structures are known, the size of the data structure used to store information may become excessively large and cumbersome. Also, document structure compatibility between programs increases efficiency and general usability of the computer. Compatibility, however, may be an issue where a user desires to transfer ink data from one application to another ink application.

### Summary of the Invention

In general, aspects of the present invention relate to a system and method for generating a document structure and storing the document structure in a serial binary format. The present invention also relates to a system and method for generating an ink document structure and storing the ink document structure so that it is accessible by other applications. The present invention further relates to a system and method for modifying or altering a portion of an inking without requiring reanalysis of the entire inking.

Aspects of the invention relate to a computer-readable medium having a data structure for storing document data in a serialized binary format so that the document data is accessible to other applications. A document structure is generated that includes root node data. The document is stored in a serial binary data format. The serial binary format includes storing size data associated with the document structure in a first data field. The serial binary format also includes storing document descriptor data in a second data field, wherein the document structure descriptor data includes at least one flag for indicating data expectancy. The serial binary format further includes storing root node data in a third data field, wherein the root node data is indicated by at least on of the flags.

Other aspects of the invention relate to a computer-implemented method for storing a binary tree structure in a serialized format. The computer-implemented method includes storing document structure size data in a first data field. The computer-implemented method also includes storing document structure descriptor data in a second data field, wherein the document structure descriptor data includes at least one flag for indicating data expectancy. The computer-implemented method further includes storing root node data in a third data field, wherein the root node data is indicated by at least one of the flags.

Yet another aspect of the invention relates to a computer-readable medium having computer-executable instructions stored thereon. The instructions include generating an ink document structure, wherein the ink document structure includes at least one root node. The instructions also include storing the ink document structure in a serial binary format. The serial binary format includes storing size data associated with the ink document structure in a first data field The serial binary format also includes storing ink document descriptor data in a second data field, wherein the ink document structure descriptor data includes at least one flag for indicating data expectancy. The serial binary format may further include storing root node data in a third data field, wherein the root node data is indicated by at least one of the flags.

### Brief Description of the Drawings

FIGURE 1 illustrates an exemplary computing device that may be used in one aspect of the present invention.
FIGURE 2 illustrates an exemplary mobile device that may be used in one aspect of the present invention.
FIGURE 3 illustrates one exemplary aspect of the system for storing ink document data in a serial binary format.
FIGURE 4 illustrates an exemplary inking in accordance with one aspect of the present invention.
FIGURE 5 illustrates an exemplary ink document structure that represents a portion of the inking represented in FIGURE 4.
FIGURE 6 illustrates a data structure for storing a serial binary data block in accordance with aspects of the present invention.
FIGURE 7 illustrates a data structure for storing context node data in accordance with aspects of the present invention.
FIGURE 8 illustrates a flow chart depicting general aspects for storing an ink document structure in a serial binary format.

### Detailed Description

Embodiments of the present invention now will be described more fully hereinafter with reference to the accompanying drawings, which form a part hereof, and which show, by way of illustration, specific exemplary embodiments for practicing the invention. This invention may, however, be embodied in many different forms and should not be construed as limited to the embodiments set forth herein; rather, these embodiments are provided so that this disclosure will be thorough and complete, and will fully convey the scope of the invention to those skilled in the art. Among other things, the present invention may be embodied as methods or devices. Accordingly, the present invention may take the form of an entirely hardware embodiment, an entirely software embodiment or an embodiment combining software and hardware aspects. The following detailed description is, therefore, not to be taken in a limiting sense.

### Illustrative Embodiments Of A Method And System For Storing Data In a Serial Binary Format

In general, the present invention relates to a system and method for generating an ink document structure and storing the ink document structure so that it is accessible by other applications. More specifically, the present invention relates to a system and method for storing data in a serial binary format to increase the efficiency of the storage. The present invention also relates to a system and method for modifying or altering a portion of an ink without requiring reanalysis of the entire inking. Even though the description set forth herein references storing and loading an ink document, the serial binary format referenced herein may be used to store other types of data. For example, the present invention may include data associated with a word processing application, spreadsheet application, drawing application, graphics application, notes application, picture application or the like. Succinctly stated, the serial binary format may be used to store any type of data that is associated with a binary tree structure.

### 1. Illustrative Embodiments Of an Ink Application

As general context of one aspect of the present invention, an ink application may provide real-time visual feedback when a user employs a pen to input data. Inking, however, may include much more than a visualization of pen strokes; it may include a data type. A user may build applications for a digitizer that supports various levels of functionality for pen, ink, ink parsing, and ink recognition. Such applications range from recognizing simple text input to creating and editing complex ink documents.

Ink applications may also include ink-to-text conversion. In some situations, an application may not accept direct ink input. In such a situation, an ink application may implement handwriting recognition and convert the ink to text so that it may be cut and pasted into an application that does not accept direct ink input. Applications may also recognize ink objects and their context in relation to other document objects. Other embodiments allow a user to manipulate ink and use the ink to author rich documents that contain text, graphics, vector shapes, multimedia objects and the like. Such embodiments handle ink as a data type that has the capability of reflowing and overlying ink objects.

Ink inputs may be associated with an application in the form of raw ink data. In one embodiment, the raw ink data may be sent to an ink analyzer to process the raw ink data and generate an ink document structure that may be separate from the raw ink data. The ink analyzer may implement parsing and recognition processes in order to divide the raw ink data into manageable stroke components. As more fully set forth below, in one embodiment, the ink analyzer may generate an ink document structure having a binary tree where each node of the tree defines a relationship to the parts of the raw ink data. The ink document structure allows ink applications associated with a platform to relate the raw ink data and the ink document structure in order to load the original ink and the associated ink document structure. The ink document structure also allows a user to load and modify the ink without requiring reanalysis of the entire ink document. Also, the present invention may allow ink to be shared between multiple applications on a platform.

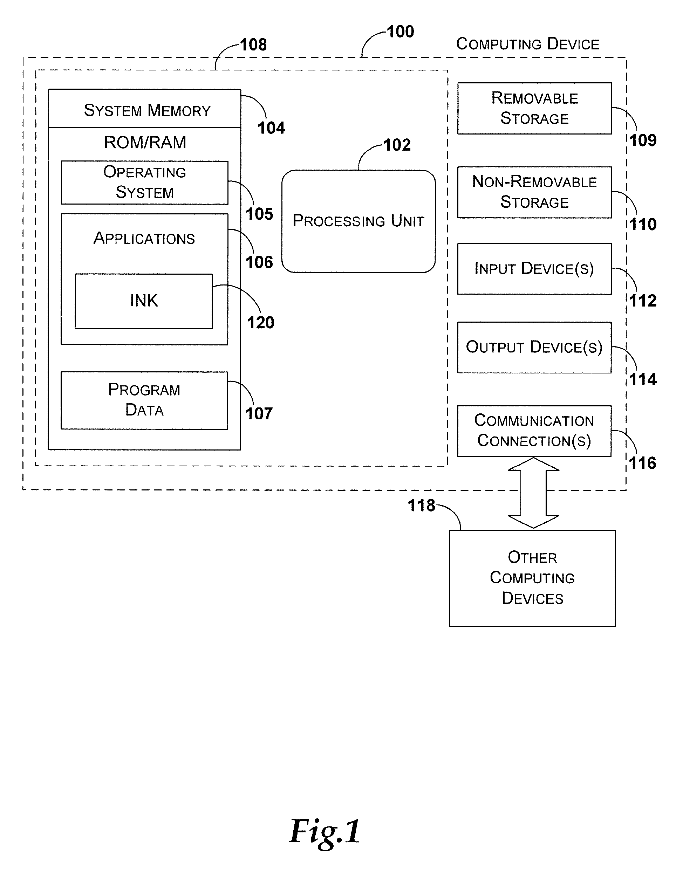

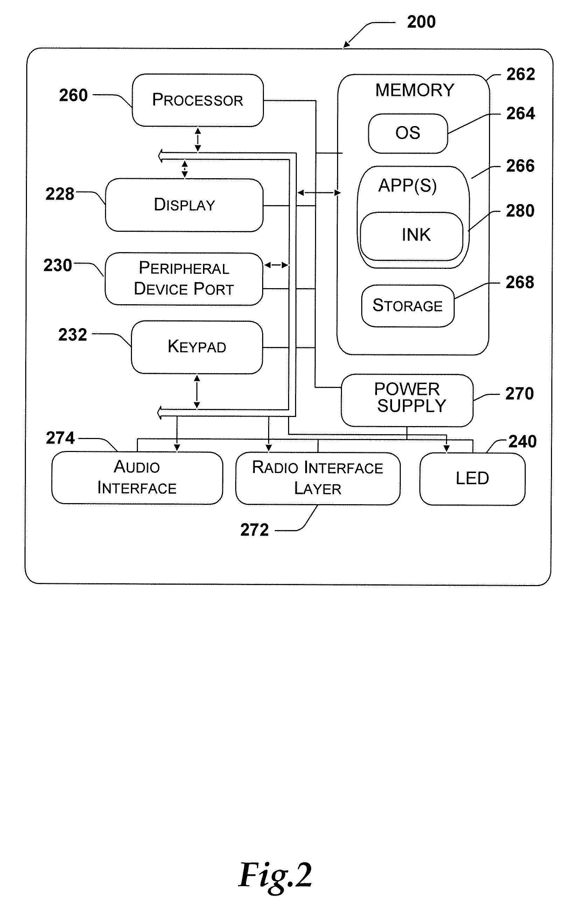

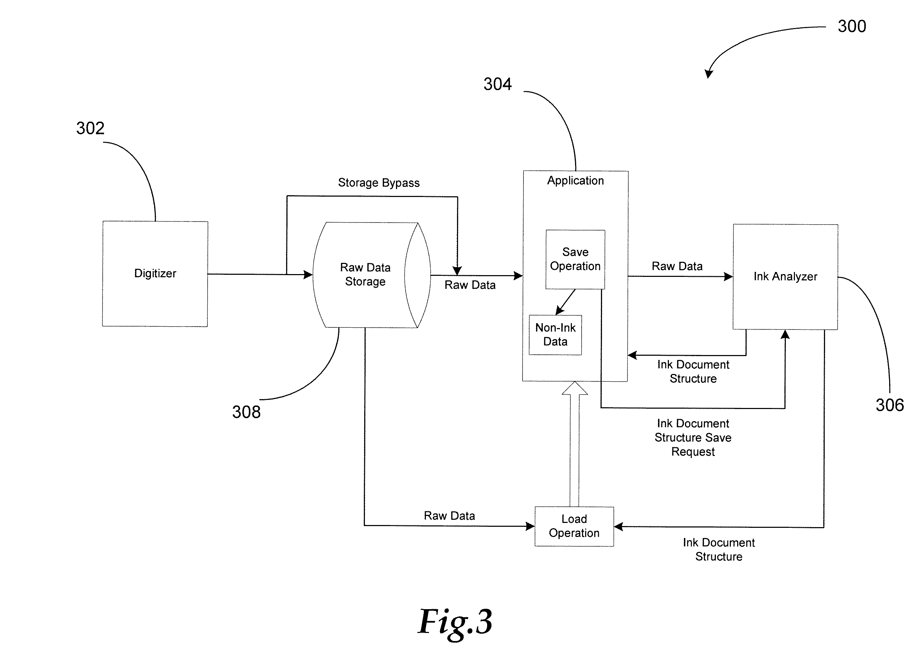

FIGURE 3 represents a general overview of one exemplary embodiment of a system for storing ink document data in a serial binary format. As illustrated, system 300 includes digitizer 302, application 304, and ink analyzer 306. Digitizer 302 may include the computing device described in conjunction with FIGURE 1. Digitizer 302 may also include the mobile computing device described in conjunction with FIGURE 2. In one embodiment, the digitizer includes a TABLET PC digitizer running the WINDOWS XP TABLET PC EDITION from MICROSOFT CORPORATION, headquartered in Redmond, Washington. The digitizer 302, however, may include any device that facilitates the operation of an ink application.

Digitizer 302 digitizes user input strokes (e.g. writing and/or drawing strokes) and, in one embodiment, stores the data in raw data storage 308. Raw data storage 308 is any type of storage capable of maintaining data from digitizer 302. Raw data storage 308 may be associated with one or more applications and/or one or more platforms. In another embodiment, digitizer 302 bypasses raw data storage 308 and transmits the digitized data to application 304.

Application 304 may include any application associated with a platform. In one embodiment, application 304 is an application that facilitates ink. Application 304 may include a word processing application, a paint application, a drafting application, a drawing application, a credit card signature application or the like. In one embodiment, application 304 includes InkEdit, InkPicture and/or OneNote from MICROSOFT CORPORATION. In another embodiment, application 304 is capable of performing a save operation and a load operation. The save operation may include saving ink data and non-ink data. Application 304 may save raw ink data in raw data storage 308, and application 304 may save an ink document structure to an ink analyzer that is associated with a platform. During a load operation, application 304 may load and integrate the ink document structure and the raw ink data as will be further set forth below.

Ink analyzer 306 may be configured to receive raw ink data from application 304. Ink analyzer 306 is configured to perform structural analysis on the raw ink data in order to generate an ink document structure. The structural analysis may include parsing the raw data and recognition of the raw data.

In one embodiment, the structural analysis may facilitate text recognition, writing and drawing classification, and layout analysis. Ink analyzer 306 may include a parsing component and a recognizer component that operate in coordination to enhance text recognition. For example, a parser may perform operations as a pre-processing step before the ink is sent to a recognizer. The pre-processing allows the parser to parse and "clean" multi-lined ink and send it to the recognizer one parcel at a time. A parcel may include a portion of the ink document. The parser may be further configured to correct incorrect input stroke order information to ensure that all strokes are recognized regardless of the order of input. Also, the parser may generate information about neighboring lines. For example, the fact that two neighboring lines start with a bullet may be a strong indicator that a current line starts with a bullet.

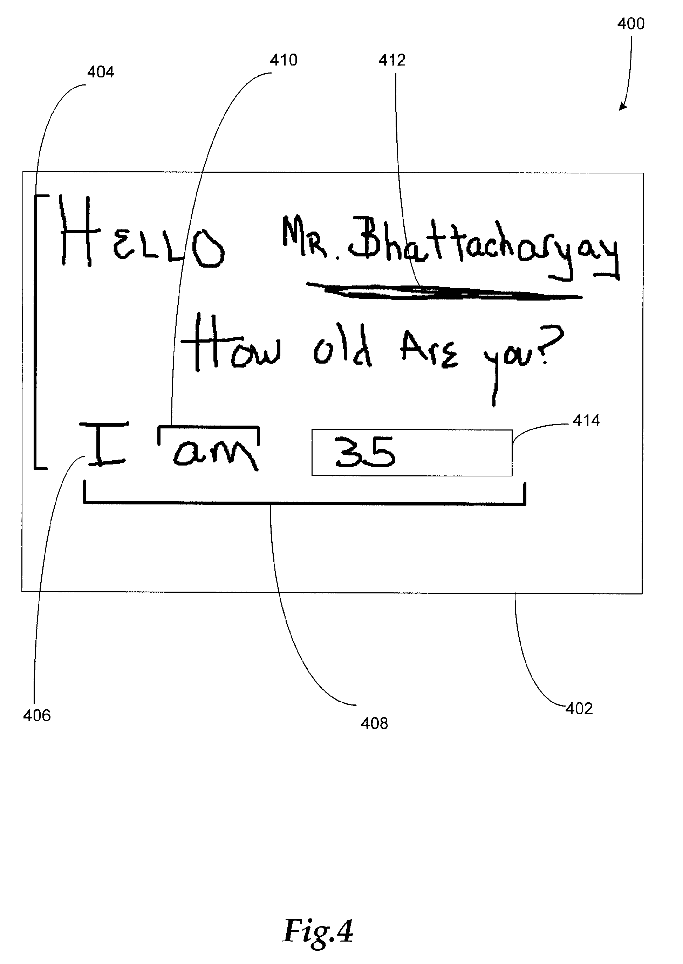

In another embodiment, the parsing operation of ink analyzer 306 may also include classifying ink as a drawing or writing. A writing may include any ink stroke that facilitates a word. A drawing stroke may include anything that is not a writing stroke. For example, referring to FIGURE 4, the stroke "H" may include a writing stroke and the "underline" may include a drawing stroke. In this manner, in accordance with one embodiment, writing strokes may be the only strokes sent to the recognizer.

In yet another embodiment of ink analyzer 306, the layout analysis includes a break down of writing and drawing strokes in relation to one another and non-ink data. Once ink analyzer 306 analyzes the strokes of an inking, a tree representation (i.e. ink document structure) of these strokes may be generated. Succinctly stated, ink analyzer 306 may include any type of analyzer that is capable of storing a document in a binary tree and making the binary tree accessible to other applications via a serial binary format. Even though the serial binary format is described herein with reference to an ink document structure, the serial binary format may be used to store any type of information associated with a document tree structure.

Once ink analyzer 306 has generated the ink document structure based on the raw data, the ink document structure is made available to application 304. The ink document structure may include a live ink document structure. When a store operation is instigated, the application requests that ink analyzer 306 store the ink document structure. In that ink analyzer 306 is a platform component the ink document structure is available to other ink applications. For example, if a user generates ink in a word processing document, this ink may be cut and pasted to a drawing application without having to be reanalyzed. In this example, the drawing application will understand how to generate the original ink from the ink document structure, Also, since the ink is parsed and saved in a serial binary format (discussed below), the ink may be modified and efficiently stored without requiring the entire ink to be reanalyzed. The modified portion may correspond to a single parcel of the ink document structure and, therefore, only require a reanalysis of the changed parcel.

In general, during a load operation, application 304 may load the raw ink data, non-ink data and the ink document structure. The raw ink data may be loaded from raw data storage 308. The non-ink data may also be loaded from raw data storage 308. It is contemplated, however, that the non-ink data is loaded from any storage associated with application 304. The ink document structure may be loaded from ink analyzer 306, which may be a platform component. In one embodiment, application 304 associates the raw data and the ink document structure so that the ink is loaded without requiring reanalysis.

FIGURE 4 represents an exemplary inking 400 in accordance with one aspect of the present invention. Inking 400 may be associated or have relationships with text, drawings, tables, charts and the like. Also, inking 400 may include various types of writings, drawings, shapes, languages, symbols and skews. As more fully described below, inking 400 may include a plurality of inputs that correlate to a plurality of nodes of an ink document structure. For example, reference number 402 indicates a writing region.

As another example, reference number 404 indicates an alignment level. Illustrated in FIGURE 4, the first and last line of inking 400 are indented to the same level, and therefore, indicate alignment level 404. The middle line of inking 400 is indented inward, and therefore, indicates another alignment level.

In yet another example, reference number 406 indicates a paragraph and reference number 408 indicates a line. Inking 400 also includes word 410, and although not shown, word 410 may also include a stroke. A stroke may include a portion of a word.

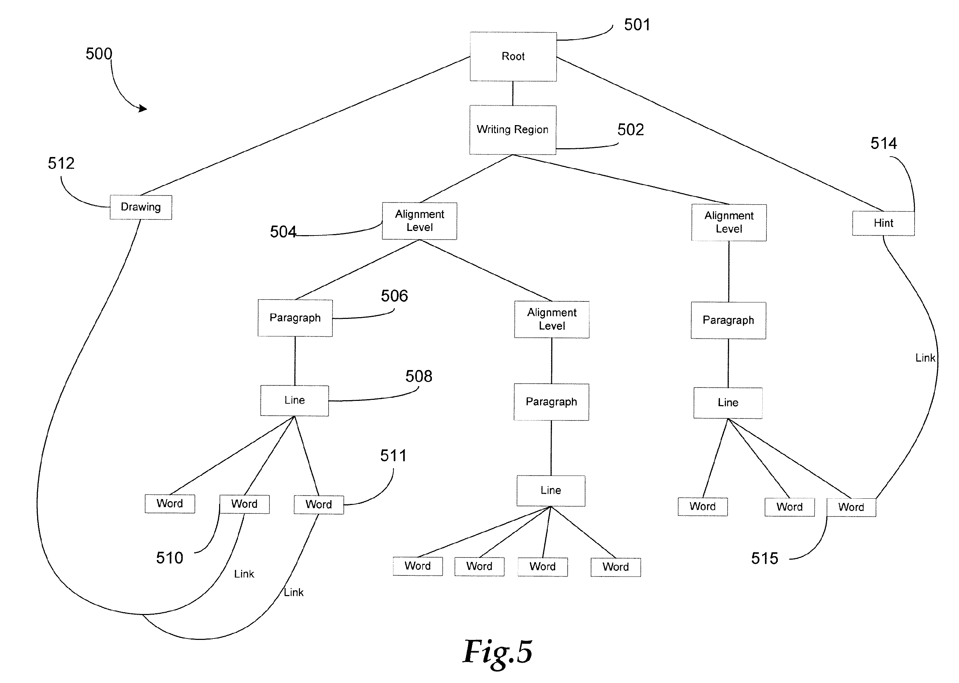

FIGURE 5 represents an exemplary ink document structure 500. The exemplary ink document structure 500 relates to the exemplary inking 400. Ink document structure 500 is but one example of an ink document structure. Any type of tree structure may be implemented that facilitates the representation of a data structure. Ink document structure 500 includes a plurality of nodes such as, root node 501, writing region node 502, alignment level node 504, paragraph node 506, line node 508, word node 510 and/or a stroke node (not shown). Ink document structure 500 may also include drawing node 512, hint node 514, and one or more link.

In FIGURE 4, drawing 412 is an underline of the name "Mr. Bhattacharyay". Drawing 412 is represented in FIGURE 5 by drawing node 512. In that drawing 412 is associated with the words "Mr." and "Bhattacharyay", drawing node 512 and word nodes 510 and 511 are associated through a link as depicted in FIGURE 5. Similarly, reference number 414 represents one type of hint. In one embodiment, hint 414 includes a hint box. Hint 414 may indicate that the input will be a number, letter, symbol, structure, code, order or the like. For example, in FIGURE 4, the hint may include a hint that the input will be a number that is not greater than three digits. Accordingly, an ink analyzer will not mistake the "5" for a "S". In that hint 414 is associated with the writing "35", hint node 514 may be associated to word node 515 through a link as depicted in FIGURE 5. The above example is for exemplary and descriptive purposes only.

In this manner, inking 400 may be represented as ink document structure 500 through nodes. For example, a stroke node (not shown) may be a child of word node 510. Word node 510 may be a child of line node 508, and line node 508 may be a child of paragraph node 506. Likewise, paragraph node 506 may be a child of alignment level node 504, and alignment level node 504 may be a child of writing region node 502. In this manner, root node 501 may contain all the information of its children nodes. In one embodiment, the entire inking 400 may be represented in reference to root node 501. Any number of nodes may be associated with any type of document as long as they facilitate the representation of the document in a document tree structure.

### 2. Ink Document Serialization

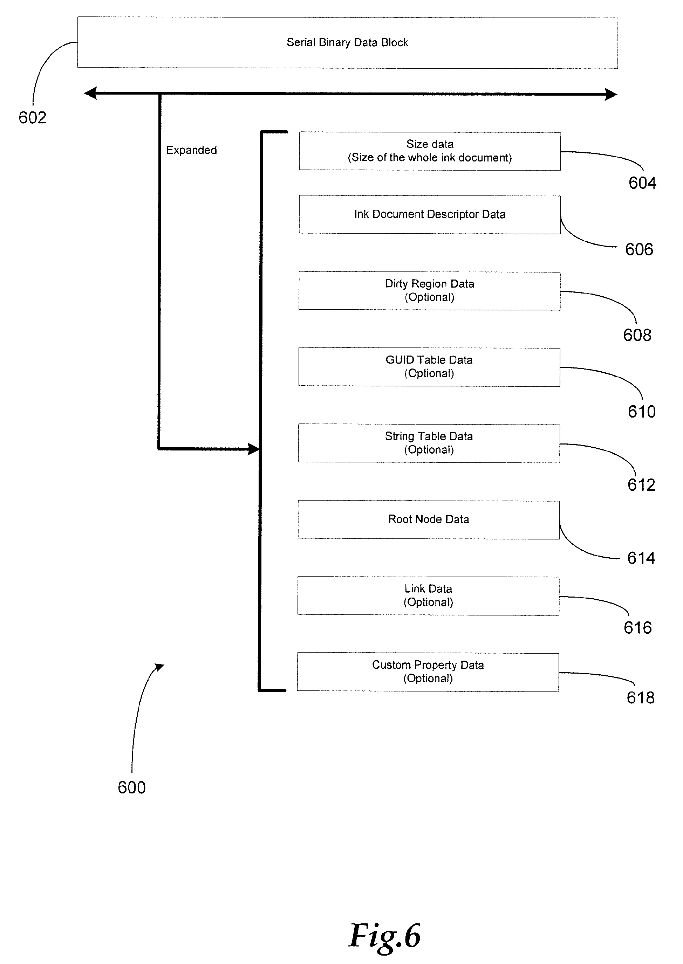

FIGURE 6 represents one exemplary embodiment for internally storing a document structure in serial binary format 600. Even though an ink document structure is referenced herein, serial binary format 600 may be used to store any type of tree document structure. When the ink document structure is generated, one ore more strings will exist that relate to the document structure. In one embodiment, compression includes a Lempel-Ziv Welch format ("LZW format") of those strings. It is contemplated, however, that the strings may be compressed by any compression format that reduces the size of the strings. FIGURE 6 includes an expanded view of the storage of data 604-618 (of which some data is optionally stored). In one embodiment, storage includes MultiByteEncoded ("MBE") values, which facilitate the storage of unsigned integers to save storage space.

Serial binary data block 602 includes serialized binary data for an ink document and is represented by data blocks 604-618. Data blocks 604-618 represent an expanded view of the whole serial binary data block 602. Size data 604 may be the first information that is stored in the serial binary data block 602. Size data 604 includes data associated with the size of the ink document structure.

Ink document descriptor data 606 may follow size data 604. Ink document descriptor data 606 may include any type of data that associates an expectance with regard to the type of data included in serial binary data block 602. This expectancy may be indicated by a set of flags that represent the associated data available in an ink document structure. The flags may indicate any data that is available in the serial binary data block 602. Data blocks 604-618 are but a few examples of data that may be associated with an ink document structure. In one embodiment of the present invention, root node data 614 (further described below) is always associated with a flag in ink document descriptor 606.

Dirty region data 608 is optional data that may not be associated with every ink document structure. Dirty region data 608 refers to data in the ink document structure that is not fully analyzed before saving. Dirty region data 608 may refer to both ink data and non-ink data such as TextWord, Image and the like. Dirty region data 608 may be indicated by a flag associated with ink document descriptor data 606. When the ink document descriptor data 606 includes a flag that indicates a dirty region, the flag indicates that the ink document structure has a finite, non-empty dirty region. If dirty region data 608 exists, this data may be represented as a series of rectangles, which are stored in a binary format to facilitate the recreation of the dirty region. In the situation where the ink document is fully analyzed, the dirty region data 608 may not be present and not require a flag in ink document descriptor 606. In one embodiment, dirty region data 608 (if present) immediately follows ink document descriptor data 606.

In one embodiment, dirty region data 608 is stored to the serial binary data block 602 as region data. Region data format may be used for storing dirty region data 608, location data for non-ink leaf context nodes or location for hint nodes. Region data may include an array of individual rectangles that define the whole area of region data. In order to properly reconstruct a region data object (e.g. dirty region data 608) from a stream, the region data may include the count of rectangles. For every rectangle, the region data may include information regarding top data, left data, width data, and height data. The individual values that describe the rectangle data may be stored using MBE or Signed MultiByte Encoding ("SMBE"). One example of a representation of persisted region data is as follows:

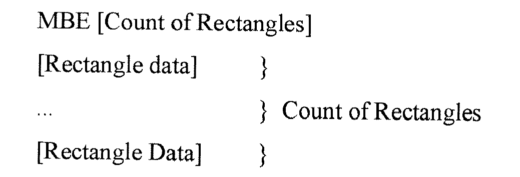

Rectangle data may be represented as follows:
SMBE [Rectangle.Left]
SMBE [Rectangle.Top]
SMBE [Rectangle.Width]
SMBE [Rectangle.Height]

Global Unique IDentifier ("GUID") table data 610 is optional data that may not be associated with every ink document structure. GUID table data 610 may include a count of the number of MBE GUIDs that are associated with a GUID table and/or a list of GUID values. The list of GUID values may include a 16-byte unsigned literal value for each GUID. The ink document structure or any individual node in the document tree structure may contain arbitrary data that is identified by a GUID. The arbitrary data may include known data types and data types that are associated with a particular application. For data that is associated with a particular application (i.e. custom property data), the data is stored against a particular GUID. GUID table data 610 specifies the values of any GUID used in relation to the ink document structure that are not deductively known. GUID table data 610 corresponding to any custom property data at the ink document level or context node level and may be subsequently referred to via MBE, zero-based indices in relation to GUID table data 610. As an example, non-predefined GUIDs may include application specific extended node types and application specific extended properties on nodes. In the situation where GUID table data 610 is present in relation to serial binary data block 602, the presence is identified by a flag that is related to the document descriptor data 606. Likewise, if GUID table data 610 is not present, a flag is not set in ink document descriptor data 606. One example of a representation of persisted GUID table data is as follows:

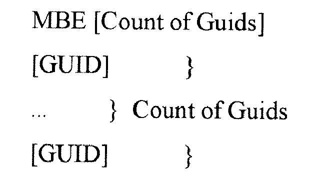

String table data 612 is optional data that may not be associated with every ink document structure. String table data 612 may include a count of the number of MBE strings in a string table, the size of compressed string data, and/or compressed string data. String table data 612 may be associated with analysis hint suffix data, prefix text data, factoid data, hint name data , word list data, custom node link data, and recognized string data. With regard to one aspect of the invention, string table data 612 may include duplications. In so far as the ink document structure is loaded in a particular sequence, maintaining an index to string table data 612 allows loading of the appropriate string data from string table data 612.

An index may not be written every time a string is associated with string table data 612. In such a situation, at least on byte per instance is saved. Moreover, the strings in string table data 612 may be LZW compressed. By not writing an index for every string in combination with LZW compression, the size of the string may be substantially reduced. In the situation where string table data 612 is present in relation to serial binary data block 602, the presence is identified by a flag that is related to ink document descriptor data 606. Likewise, if string table data 612 is not present, a flag is not set in ink document descriptor data 606. One example of a representation of persisted string table data is as follows:
// StringTable Data
MBE [Count of strings]
MBE [Size of Compressed string data]
[Compressed string data bytes]

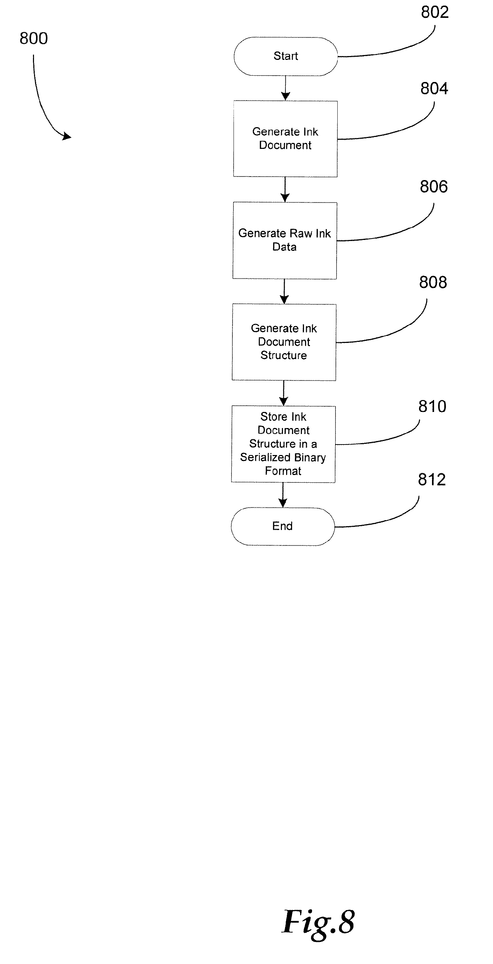

Root node data 614 includes data related to the size of the root node and/or the data associated with the root node. Root node data 614 may be stored as discussed in relation to FIGURE 8 (more fully set forth below). In one aspect, root node data is mandatory data that is associated with every ink document structure even if root node data 614 is empty. A flag associated with ink document descriptor data 606 may indicate the presence of root node data 614.

Link data 616 is optional data that may not be associated with every ink document structure. Link data 616 includes data that indicates whether or not any nodes of the ink document structure are linked to other nodes in the same ink document structure. Link data 616 may be maintained globally in association with the ink document structure. In storing link data 616, link data 616 may include a count of the number of links associated with the ink document structure. Individual link data 616 may also include the MBE size of the data. In one aspect, the MBE size data is followed by a link descriptor, which identifies the type of link and origin information. In another aspect, link descriptor data is followed by the SMBE value of a source node index and the SMBE value of a destination node index. The source node index and the destination node index identify the source node and destination node, respectively. In yet another aspect, if the link descriptor data indicates that link data 616 includes a custom link, the custom link data is read from a global string table that is identified by an index in the global string table. In the situation where link data 616 is present in relation to serial binary data block 602, the presence is identified by a flag that is related to the ink document descriptor data 606. Likewise, if link data 616 is not present, a flag is not set in ink document descriptor data 606. One example of a representation of persisted link data is as follows:
[ContextLink Descriptor] //1 byte
SMBE [Source Node Index]
SMBE [Destination Node Index]

Custom property data 618 is optional data that may not be associated with every ink document structure. Custom property data 618 may be associated with the ink document structure, and in one aspect, is stored as custom property data associated with a node. Custom property data may include any arbitrary data that an application associates with a node. Custom property data may be identified by a GUID and my include a known or unknown GUID. In the situation where the GUID is unknown, the GUID may be stored as GUID table data 610. In storing custom property data 618, a flag may identify custom property data 618 as a known value. In another aspect, storing custom property data 618 includes an index to GUID table data 610. The storage of custom property data 618 may also include the MBE value of the size of the data and an array of bytes that represent the data. In the situation where custom property data 618 is present in relation to serial binary data block 602, the presence is identified by a flag that is related to ink document descriptor data 606. Likewise, if custom property data 620 is not present, a flag is not set in ink document descriptor data 606. One example of a representation of persisted ink document structure is as follows:

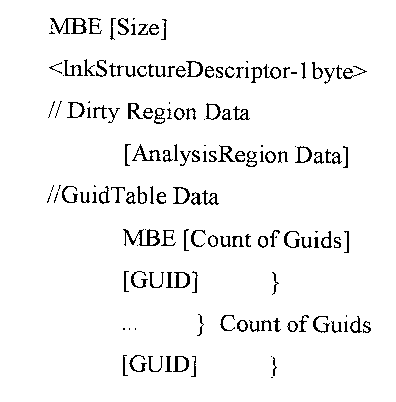

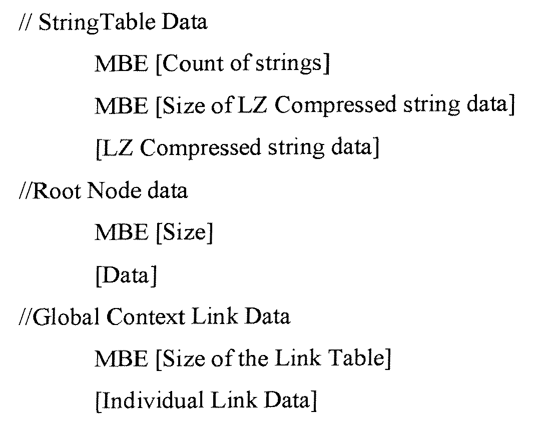

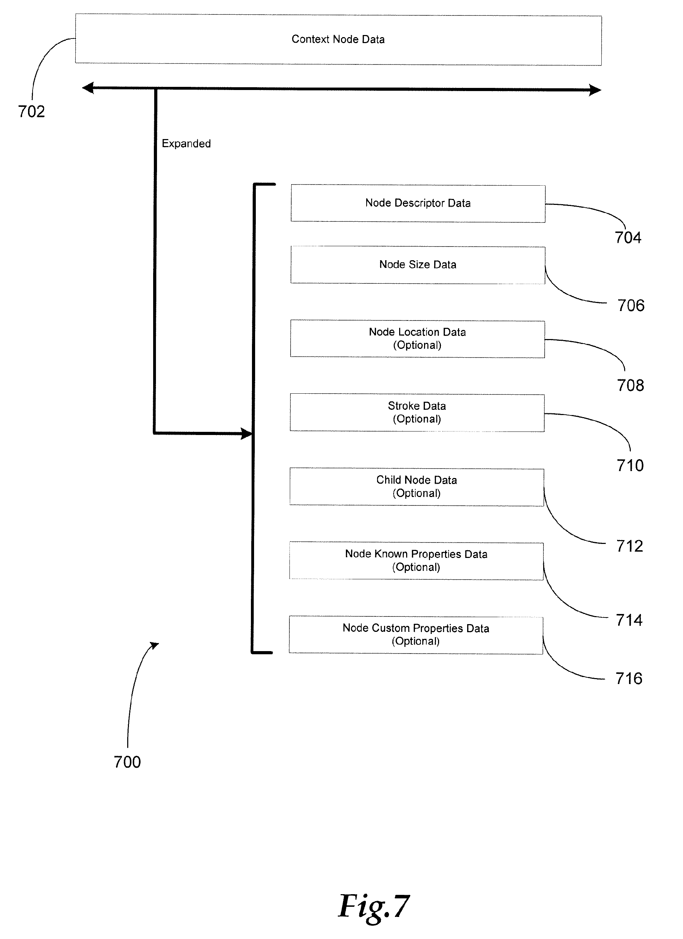

FIGURE 7 represents one exemplary embodiment for internally storing context node data 700. In one embodiment, root node data 614 is a context node and stored as context node data 700. Context node data 700 may be included in the serialized binary data for an ink document and is represented by data blocks 704-716. Data blocks 704-716 represent an expanded view of context node data 702.

Node descriptor data 704 may include data that is associated with each node of an ink document structure. Node descriptor data 704 may be indicated by a collection of flags that define the configuration of the node data as well as the types of nodes associated with the ink document structure.

Node size data 706 may include possible known properties that are stored on a particular node (e.g. lattice data, bounding boxes data, and/or pinning flags data). Node size data 706 may also include unknown properties (extended/custom properties) along with location data, children sub-node data, and stroke data. In one aspect, node size data 706 may immediately follow node descriptor data 704. Succinctly stated, node descriptor data 704 may indicate the size of the entire context node tree.

Node location data 708 is optional data that may not be associated with every node type. In the situation where node location data 708 is present, the presence is identified by a flag that is related to node descriptor data 704. Likewise, if node location data 708 is not present, a flag is not set in node descriptor data 704. In one aspect, if node descriptor data 704 indicates a non-ink leaf node, node location data 708 may follow. A non-ink leaf node may include any node that does not have children nodes and does not include stroke data. For example, a non-ink leaf node may include an image node, a text node or a hint node. In one embodiment node location data 708 is stored as region data. Region data may include an array of individual rectangles that define the whole area of region data. In order to properly reconstruct a region data object (e.g. node location data 708) from a stream, the region data may include the count of rectangles. For every rectangle, the region data may include information regarding top data, left data, width data, and height data. These individual values that describe the rectangle data may be stored using MBE or SMBE. One example of a representation of persisted region data is as follows:

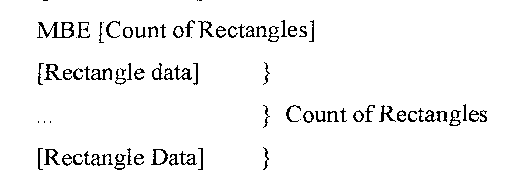

Rectangle data may be represented as follows:
SMBE [Rectangle.Left]
SMBE [Rectangle.Top]
SMBE [Rectangle.Width]
SMBE [Rectangle.Height]

Stroke data 710 is optional data that may not be associated with every node type. Stroke data 710 may include data associated with any node that includes stroke data. For example, stroke data 710 may be associated with an unclassified ink node, a word node, or a drawing node. In the situation where stroke data 710 is present, the presence may be identified by a flag that is related to node descriptor data 704. Likewise, if stroke data 710 is not present, a flag is not set in node descriptor data 704.

When stroke data 710 is present, storage may include the MBE value of the number of strokes associated with the node. In one aspect, each stroke is associated with a one byte stroke descriptor that includes a collection of stroke descriptor flags. These flags may indicate a stroke identification that signifies MBE stroke identification data. In one aspect, if the stroke identification flag is not set, the stroke identification may include the last stroke identification retrieved. The flags may also include writing stroke descriptor flags that identify the type of stroke associated with writing. In another aspect, the flags may include drawing stroke descriptor flags that identify the type of stoke associated with a drawing. The flags may also include a highlighter descriptor flag that identifies the type of stroke associated with a highlight. In yet another embodiment, the flags may include confirmed ancestor descriptor flags that identify a valid confirmed ancestor for a stroke. The MBE value of the confirmed ancestor serialization index may be stored in the stream. In still another embodiment, the flags may include stroke language identification flags that identify a language associated with the stroke. A signed encoded value corresponding to the language may be stored in the stream. In yet another embodiment, the values associated with the flags are stored in the above-recited order depending on the stroke descriptor data. It is further contemplated that any type of flag may be set that facilitates the identification of a stroke.

Child node data 712 is optional data that may not be associated with every node type. In the situation where child node data 712 is present, the presence may be identified by a flag that is related to node descriptor data 704. Likewise, if child node data 712 is not present, a flag is not set in node descriptor data 704. Child node data 712 may include container type nodes (i.e. paragraph nodes, line nodes, alignment nodes, writing region nodes, and/or root nodes etc.). Container nodes may include any node type that contains children nodes. Storage of child node data 712 includes storing the number of child nodes and the data from each child node. The data from each child is stored in the same way as context node data 702.

Node known properties data 714 is optional data that may not be associated with every node type. In the situation where node known properties data 714 is present, the presence may be identified by a flag that is related to node descriptor data 704. Likewise, if node known properties data 714 is not present, a flag is not set in node descriptor data 704.

Node known properties data 714 includes properties where the data type and format is known and facilitate optimization to reduce the data size. Node known properties data 714 may include rotated bounding box data (an array of eight integers), recognition lattice data (an array of bytes including variable length), annotation data confirmation data (integer type) and/or hint data (for hint nodes). In one embodiment, this data is stored in a predefined manner in order to optimize binary representation of the data. For example, an array of integers may be saved in a signed encoded format. Also, complex data types, such as structure or class data, may be stored in a binary format that efficiently defines the data. One example of a representation of persisted known properties data is as follows:

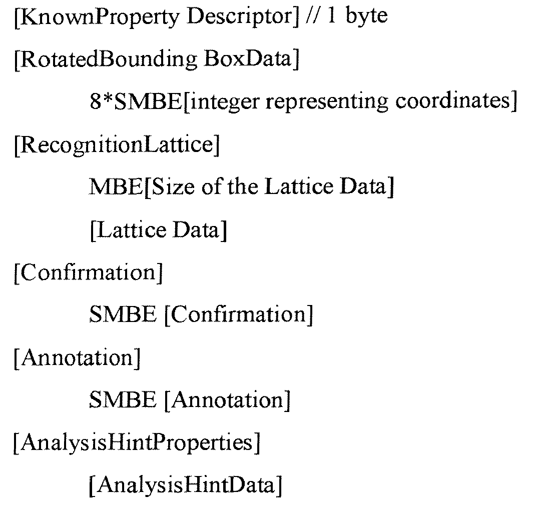

Node custom properties data 716 is optional data that may not be associated with every node type. In the situation where node custom properties data 716 is present, the presence may be identified by a flag that is related to node descriptor data 704. Likewise, if node custom properties data 716 is not present, a flag is not set in node descriptor data 704. Node custom property data may include any arbitrary data that an application associates with a node. Node custom property data 716 may be identified by a GUID and may include a known or unknown GUID. In the situation where the GUID is unknown, the GUID may be stored as GUID table data 610. In storing node custom property data 716, a flag may identify the node custom property data 716 as a known value. In another aspect, storing node custom property data 716 includes an index to GUID table data 610. The storage of node custom property data 716 may also include the MBE value of the size of the data and an array of bytes that represent the data. One example of a representation of persisted context node data is as follows:

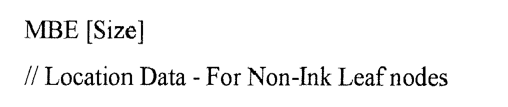

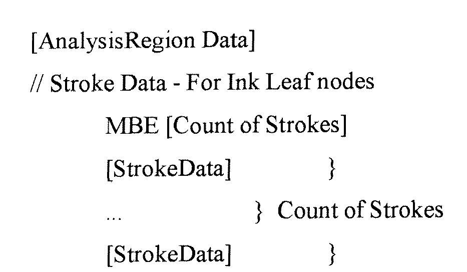

### 3. Illustrative process for storing a document in a serialized format

FIGURE 8 represents one general embodiment of a system for storing ink document data in a serialized binary format. System 800 starts at starting block 802 and flows to block 804 where an ink document is generated. Block 804 may include a digitizer for digitizing stroke inputs from a user. The digitizer may include a computing device (e.g. FIGURE 1), a mobile computing device (e.g. FIGURE 2), a TABLET PC running the WINDOWS XP TABLET EDITION from MICROSOFT CORPORATION, or any device that facilitates the operation of an ink application. Moreover, even though the description herein references an ink document, the system 800 may be implemented in relation to any type of data. For example, the present invention may also be used in association with a word processing application, spreadsheet application, drawing application, graphics application, notes application, picture application or the like. In one embodiment the application includes InkEdit, InkPicture and/or OneNote from MICROSOFT CORPORATION. From block 804, process 800 flows to block 806.

Block 806 indicates the step of generating raw ink data. In one embodiment, generating raw ink data includes a digitizer converting stroke inputs into raw ink data and storing the raw ink data to a raw data storage. In another embodiment, generating raw ink data includes the digitizer converting stroke inputs into raw ink data and transmitting the raw ink data to an application. The process 800 then flows to block 808.

Block 808 indicates the step for generating an ink document structure. Block 808 may include an ink analyzer receiving raw ink data from an application. Ink analyzer may be configured for parsing and recognition operations as more fully set forth above in conjunction with FIGURE 3. Block 808 may further include generating an ink document structure as described above in accordance with FIGURES 4 and 5. In another embodiment, the ink document structure includes a plurality of nodes that correlate to an inking. For example, the ink document structure may include a writing region node, an alignment node, a paragraph node, a line node, a word node or a stroke node. The ink document structure may also include a drawing node and/or a hint node. It is contemplated that the ink document structure may include any type of node that facilitates a binary tree representation of an inking. In another embodiment, the nodes may be associated with links that correlate related nodes.

Flowing to block 810, the ink document structure may be stored for global accessibility. In one embodiment, the ink document structure is compressed and stored as set forth above in conjunction with FIGURE 6 and 7. In such a case, an inking may be generated in conjunction with an application and then stored for accessibility to other applications. Stated another way, other applications associated with the platform may utilize the ink document structure and the raw ink to regenerate the analyzed ink. This accessibility facilitates cut and paste operations between applications. Also, the ink may be modified without requiring reanalysis of the entire ink document inasmuch as the ink has been parsed, recognized and saved in a serialized format.

### 4. Illustrative Operating Environment

Referring to FIGURE 1, an exemplary system for implementing the invention includes a computing device, such as computing device 100. In a basic configuration, computing device 100 typically includes at least one processing unit 102 and system memory 104. Depending on the exact configuration and type of computing device, system memory 104 may be volatile (such as RAM), non-volatile (such as ROM, flash memory, and the like) or some combination of the two. System memory 104 typically includes operating system 105, one or more applications 106, and may include program data 107. In one embodiment, applications 106 further include application 120 for inking operations. This basic configuration is illustrated in FIGURE 1 by those components within dashed line 108.

Computing device 100 may also have additional features or functionality. For example, computing device 100 may also include additional data storage devices (removable and/or non-removable) such as, for example, magnetic disks, optical disks, or tape. Such additional storage is illustrated in FIGURE 1 by removable storage 109 and non-removable storage 110. Computer storage media may include volatile and non-volatile, removable and non-removable media implemented in any method or technology for storage of information, such as computer readable instructions, data structures, program modules or other data. System memory 104, removable storage 109 and non-removable storage 110 are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device 100. Any such computer storage media may be part of device 100. Computing device 100 may also have input device(s) 112 such as keyboard, mouse, pen, voice input device, touch input device, etc. Output device(s) 114 such as a display, speakers, printer, etc. may also be included. All these devices are known in the art and need not be discussed at length here.

Computing device 100 also contains communications connection(s) 116 that allow the device to communicate with other computing devices 118, such as over a network or a wireless mesh network. Communications connection(s) 116 is an example of communication media. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

FIGURE 2 illustrates a mobile computing device that may be used in one exemplary embodiment of the present invention. With reference to FIGURE 2, one exemplary system for implementing the invention includes a mobile computing device, such as mobile computing device 200. The mobile computing device 200 has processor 260, memory 262, display 228, and keypad 232. Memory 262 generally includes both volatile memory (e.g., RAM) and non-volatile memory (e.g., ROM, Flash Memory, or the like). Mobile computing device 200 includes operating system 264, which is resident in memory 262 and executes on processor 260. Keypad 232 may be a push button numeric dialing pad (such as on a typical telephone), or a multi-key keyboard (such as a conventional keyboard). Display 228 may be a liquid crystal display, or any other type of display commonly used in mobile computing devices. Display 228 may be touch-sensitive, and would then also act as an input device.

One or more application programs 266 are loaded into memory 262 and run on operating system 264. Examples of application programs include phone dialer programs, email programs, scheduling programs, PIM (personal information management) programs, word processing programs, spreadsheet programs, Internet browser programs, and so forth. Mobile computing device 200 also includes non-volatile storage 268 within memory 262. Non-volatile storage 268 may be used to store persistent information which should not be lost if mobile computing device 200 is powered down. Applications 266 may use and store information in storage 268, such as e-mail or other messages used by an e-mail application, contact information used by a PIM, appointment information used by a scheduling program, documents used by a word processing application, and the like. In one embodiment, applications 266 further include application 280 for inking operations.

Mobile computing device 200 has power supply 270, which may be implemented as one or more batteries. Power supply 270 might further include an external power source, such as an AC adapter or a powered docking cradle that supplements or recharges the batteries.

Mobile computing device 200 is shown with two types of external notification mechanisms: LED 240 and audio interface 274. These devices may be directly coupled to power supply 270 so that when activated, they remain on for a duration dictated by the notification mechanism even though processor 260 and other components might shut down to conserve battery power. LED 240 may be programmed to remain on indefinitely until the user takes action to indicate the powered-on status of the device. Audio interface 274 is used to provide audible signals to and receive audible signals from the user. For example, audio interface 274 may be coupled to a speaker for providing audible output and to a microphone for receiving audible input, such as to facilitate a telephone conversation.

Mobile computing device 200 also includes radio interface layer 272 that performs the function of transmitting and receiving communications, such as radio frequency communications. Radio interface layer 272 facilitates wireless connectivity between mobile computing device 200 and the outside world, via a communications carrier or service provider. Transmissions to and from radio interface layer 272 are conducted under control of operating system 264. In other words, communications received by radio interface layer 272 may be disseminated to application programs 266 via operating system 264, and vice versa.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A computer-readable medium having a data structure stored thereon for storing a binary tree structure in a serialized data format, comprising:
a first data field for storing size data associated with a document structure;
a second data field for storing document descriptor data, wherein the document descriptor data includes one or more flags that indicate associated data of the document structure; and
a third data field for storing root node data, wherein the root node data is indicated by at least one of the flags.

2. The computer-readable medium of claim 1, further comprising a fourth data field for storing dirty region data, wherein the presence of the dirty region data in the serialized data is indicated by one of the flags associated with the document descriptor data.

3. The computer-readable medium of claim 2, wherein the dirty region data includes at least one of: location data of ink data that has not been analyzed by an ink analyzer and location data of non-ink data that has not been analyzed by an ink analyzer.

4. The computer-readable medium of claim 2, wherein the dirty region data includes at least one of: a count of rectangles associated with the dirty region data, top data, left data, width data, and height data.

5. The computer-readable medium of claim 1, further comprising a fourth data field for storing Global Unique Identifier data, wherein the presence of the Global Unique Identifier data in the serialized data is indicated by one of the flags associated with the document descriptor data.

6. The computer-readable medium of claim 5, wherein the Global Unique Identifier data includes at least one of: application specific node types and application specific extended properties.

7. The computer-readable medium of claim 1, further comprising a fourth data field for storing string table data, wherein the presence of the string table data in the serialized data is indicated by one of the flags associated with the document descriptor data.

8. The computer-readable medium of claim 7, wherein the string table data is associated with at least one of: analysis hint suffix data, prefix text data, factoid data, hint node data, word list data, custom link node data, and recognized string data.

9. The computer-readable medium of claim 1, further comprising a fourth data field for storing link data, wherein the presence of the link data in the serialized data is indicated by one of the flags associated with the document descriptor data.

10. The computer-readable medium of claim 9, wherein the link data includes at least one of: a count of links associated with the document structure, link data size, a link descriptor, source node index data, and destination node index data.

11. The computer-readable medium of claim 1, further comprising a fourth data field for storing custom property data, wherein the presence of the custom property data in the serialized data is indicated by one of the flags associated with the document descriptor data.

12. The computer-readable medium of claim 11, wherein the custom property data includes at least one of: size data, and an array of bytes that represent the custom property data.

13. The computer-readable medium of claim 1, wherein the root node data includes descriptor data, and wherein the presence of the node descriptor data in the serialized data includes one or more flags that indicate data associated with the root note data.

14. The computer-readable medium of claim 13, wherein the root node data includes size data that indicates the size of the root node data.

15. The computer-readable medium of claim 13, wherein the root node data includes at least one of: node location data, stroke data, child node data, node known properties data, and node custom properties data.

16. A computer-implemented method for storing a binary tree structure in a serialized data format, comprising:
storing document structure size data in a first data field;
storing document structure descriptor data in a second data field, wherein the document structure descriptor data includes at least one flag for indicating data expectancy; and
storing root node data in a third data filed, wherein the root node data is indicated by at least one of the flags.

17. The computer-implemented method of claim 16, further comprising storing, in a fourth data field, at least one of dirty region data, Global Unique Identifier table data, string table data, link data, and custom property data.

18. The computer-implemented method of claim 16, wherein root node data includes at least one of: expectancy data, size data, node location data, stroke data, child node data, node known properties data, and node custom properties data.

19. A computer-readable medium having computer-executable instructions stored thereon, the instructions comprising:
generating an ink document structure, wherein the ink document structure includes at least one root node;
storing the ink document structure in a serial binary data format, wherein storing the serial binary format includes:
storing size data associated with the ink document structure in a first data field;
storing ink document descriptor data in a second data field, wherein the ink document structure descriptor data includes at least one flag for indicating data expectancy; and
storing root node data in a third data field, wherein the root node data is indicated by at least one of the flags.

20. The computer-executable instructions of claim 19, wherein root node data includes at least one of: expectancy data, size data, node location data, stroke data, child node data, node known properties data, and node custom properties data.
